(19) Europäisches Patentamt
European Patent Office
Office européen des brevets

(11) EP 0 489 318 B1

(12) EUROPÄISCHE PATENTSCHRIFT

(45) Veröffentlichungstag und Bekanntmachung des Hinweises auf die Patenterteilung:
**31.01.1996 Patentblatt 1996/05**

(51) Int Cl.⁶: **C08F 20/14**

(21) Anmeldenummer: **91119990.9**

(22) Anmeldetag: **23.11.1991**

(54) **Substanz- und Suspensionspolymerisate auf der Basis von Methylmethacrylat**

Mass and suspension polymers based on methyl methacrylate

Polymères en masse et en suspension à base de méthacrylate de méthyle

(84) Benannte Vertragsstaaten:
**DE ES FR GB IT**

(30) Priorität: **04.12.1990 DE 4038625**

(43) Veröffentlichungstag der Anmeldung:
**10.06.1992 Patentblatt 1992/24**

(73) Patentinhaber: **BASF Aktiengesellschaft**
**D-67063 Ludwigshafen (DE)**

(72) Erfinder:
- **Besecke, Siegmund, Dr.**
  **W-6104 Seeheim-Jugenheim (DE)**
- **Schoen, Wilfried**
  **W-6507 Ingelheim (DE)**
- **Endlich, Karl-Ludwig**
  **W-6500 Mainz (DE)**

(56) Entgegenhaltungen:
**DE-A- 2 756 035** **DE-C- 871 366**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 489 318 B1

Printed by Jouve, 75001 PARIS (FR)

**Beschreibung**

Die vorliegende Erfindung betrifft Substanz- und Suspensionspolymerisate aus

a) 80 bis 100 Gew.-% Methylmethacrylat und
b) 0 bis 20 Gew.-% weiteren radikalisch polymerisierbaren Monomeren,

erhältlich durch Polymerisation bei einer über den Großteil der Polymerisationszeit annähernd konstanten Temperatur zwischen 100 und 140°C mittels eines Initiatorsystems aus mindestens zwei peroxidischen Initiatoren I unterschiedlicher Zerfallstemperaturen T, bei denen jeweils die Hälfte des Initiators nach 1 h zerfallen ist, wobei

- der Initiator $I_{min}$ mit der tiefsten Zerfallstemperatur eine Zerfallstemperatur $T_{min}$ im Bereich von 60 bis 100°C hat,
- der Initiator $I_{max}$ mit der höchsten Zerfallstemperatur eine Zerfallstemperatur $T_{max}$ im Bereich von 100 bis 140°C hat, die Differenz von $T_{max}$ und $T_{min}$ größer als 10°C und $I_{max}$ ein Perketal der allgemeinen Formel (1) ist,

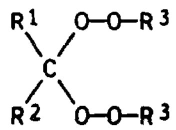

(1)

in der die Reste $R^1$ und $R^2$ gleiche oder verschiedene Alkylreste mit 1 bis 5 Kohlenstoffatomen sind, wobei $R^1$ und $R^2$ zu einem 5- oder 6-Ring verbunden sein können und $R^3$ ein tert.-Butyl- oder tert.-Amylrest ist sowie

- weitere Initiatoren $I_n$, die gewünschtenfalls mitverwendet werden können, Zerfallstemperaturen $T_n$ zwischen $T_{min}$ und $T_{max}$ aufweisen.

Außerdem betrifft die Erfindung ein Verfahren zur Herstellung dieser Polymerisate sowie deren Verwendung zur Herstellung von Formkörpern und die Formkörper selber.

Die Substanz- und Suspensionspolymerisation von Methylmethacrylat und gegebenenfalls weiteren Monomeren ist in zahlreichen Ausgestaltungen allgemein bekannt. In Gegenwart von radikalischen Polymerisationsinitiatoren, z.B. organischen Peroxiden sowie Azo-Verbindungen läßt sich Methylmethacrylat unter Inertgasatmosphäre üblicherweise bei Temperaturen von 20 bis 170°C unter atmosphärischem oder leicht erhöhtem Druck polymerisieren. An die auch als "Acrylglas" bezeichneten Formteile aus diesen Polymerisaten werden hohe Qualitätsanforderungen z.B. hinsichtlich einer geringen Eigenfarbe, hoher Transparenz, eines hohen Oberflächenglanzes sowie Blasen- und Schlierenfreiheit gestellt. Da diese Eigenschaften u.a. vom Restmonomerengehalt abhängen, ist man allgemein bestrebt, diesen Restmonomerengehalt so gering wie möglich zu halten, z.B. durch Entgasung des Polymeren oder durch Wahl spezieller Polymerisationsbedingungen wie langen Polymerisationszeiten, bestimmter Temperaturführung oder Verwendung bestimmter Initiatoren.

Nach der Lehre der JP-B 71/03183 erzielt man bei der Suspensionspolymerisation von Methylmethacrylat mittels eines Initiatorsystems aus Lauroylperoxid und 1,1-Azobis-1-cyclohexannitril bei 90 bis 135°C einen Restmonomerengehalt von weniger als 0,3 Gew.-%; dies jedoch auf Kosten der relativ langen Polymerisationszeit von 8 Stunden.

In der JP-A 87/177 001 wird für die Polymerisation von Monomeren, darunter Methylmethacrylat, empfohlen, zwei verschiedene Initiatoren zu verwenden, wobei auch 2,2-Bis-(t-butylperoxy)-octan als Initiator erwähnt wird.

Aus der DE-A 2 756 035 ist es bekannt, Vinylmonomere in mindestens zwei Stufen bei fortschreitend höherer Temperatur im Bereich von 70 bis 150°C mittels eines Initiatorsystems aus einem leichter und einem schwerer zerfallenden Initiator zu polymerisieren, wobei der schwerer zerfallende ein Di-tert.-butyl-perketal eines Alkanonsäureesters ist. Unter der Vielzahl der hiernach polymerisierbaren Monomeren wird auch Methylmethacrylat erwähnt, jedoch befassen sich die experimentellen Untersuchungen nur mit Styrol.

Ein ähnliches Verfahren zur Copolymerisation von Vinylacetat mit Vinylestern anderer Fettsäuren ist aus der DE-A 2 229 569 bekannt, wobei als Initiator mit höherer Zerfallstemperatur das Di-tert.-butylperketal des Butanons empfohlen wird.

Der Erfindung lagen hochwertige Substanz- und Suspensionspolymerisate geringen Restmonomerengehaltes sowie hoher Lichtdurchlässigkeit auf Basis von Methylmethacrylat als Aufgabe zugrunde, die in kürzeren Polymerisationszeiten erhältlich sind als bisher.

Demgemäß wurden die eingangs definierten Polymerisate gefunden.

Weiterhin wurde ein Verfahren zu deren Herstellung gefunden sowie deren Verwendung zur Herstellung von Formkörpern.

Bevorzugt werden Homopolymerisate des Methylmethacrylats. Daneben können die Polymerisate auch noch aus

bis zu 20 Gew.-% weiteren Monomeren aufgebaut sein, und zwar vorzugsweise aus

$C_1$-$C_6$-Alkylestern der Acrylsäure,

$C_2$-$C_6$-Alkylestern der Methacrylsäure sowie daneben aus

Acryl- und Methacrylsäure,

Hydroxyalkylestern,

Aminoalkylestern und

Aminoalkylamiden der Acryl- und Methacrylsäure mit bis zu 6 C-Atomen in den Alkylresten,

Acryl- und Methacrylamid sowie deren

N-Alkyl- und Dialkylderivaten mit $C_1$-$C_6$-Alkylgruppen,

Vinylestern von aliphatischen $C_2$-$C_{18}$-Carbonsäuren und

Vinylaromaten wie Styrol und $\alpha$-Methylstyrol

sowie aus Mischungen dieser Monomeren.

Als Initiatoren $I_{min}$ eignen sich beispielsweise

aliphatische und aromatische Diacylperoxide wie

Diisononanoylperoxid (T = 78°C),

Didecanoylperoxid (T = 80°C),

Dilauroylperoxid (T = 80°C),

Dibenzoylperoxid (T = 91°C),

Peroxydicarbonate wie

Diisopropylperoxydicarbonat (T = 61°C) und

Alkylperester wie

t-Butylperneodecanoat (T = 64°C),

t-Amylperpivalat (T = 71°C),

t-Butylperpivalat (T = 74°C) und

t-Butyl-per-2-ethylhexanoat (T = 92°C).

Initiatoren $I_{max}$ sind die definitionsgemäßen Perketale (1), unter denen

1,1-Bis-(t-butylperoxy)-3,3,5-trimethylcyclohexan (T = 114°C),

1,1-Bis-(t-butylperoxy)-cyclohexan (T 117°C) und

2,2-Bis-(t-butylperoxy)-butan (T = 124°C) bevorzugt werden.

Für eine besonders gleichmäßige Steuerung der Polymerisation und damit für die Herstellung von Polymerisaten mit möglichst einheitlicher Molmasse empfiehlt sich die Mitverwendung weiterer Initiatoren $I_n$, deren Zerfallstemperaturen zwischen $T_{min}$ und $T_{max}$ liegen, wobei sich die Zerfallstemperaturen dieser Initiatoren untereinander bzw. von $T_{min}$ und $T_{max}$ jeweils um 10 bis 20°C unterscheiden sollten.

Als derartige weitere Initiatoren $I_n$ eignen sich diejenigen, die für $I_{min}$ und $I_{max}$ angegeben wurden. Für den Zerfallstemperaturbereich zwischen 100 und 140°C kann man außer den Perketalen beispielsweise noch Dialkylperoxide wie

t-Butylcumylperoxid (T 138°C) und

Alkylperester wie

t-Butylperisononanoat (T = 119°C) und

t-Butylperbenzoat (T = 124°C)

verwenden.

Die angegebenen Werte für die Zerfallstemperaturen T bei einer 1-stunden-Halbwertszeit stammen aus den Firmenschriften A 3.2.1 und A 3.7.1 "Organische Peroxide" der Peroxid-Chemie GmbH. Weitere mögliche Initiatoren sind dort angegeben.

Die Gesamtmenge aller Initiatoren beträgt vorzugsweise 0,001 bis 1 mol-%, besonders 0,01 bis 0,1 mol-%, bezogen auf die Gesamtmenge der eingesetzten Monomeren (a) und (b).

Der Anteil der Initiatoren mit den Zerfallstemperaturen zwischen 100 und 140°C beträgt vorzugsweise 20 bis 80 mol-%, besonders 30 bis 60 mol-%, bezogen auf die Gesamtinitiatormenge, wovon mindestens 25 mol-% auf das Perketal (1) entfallen sollten.

Eine Verbesserung hinsichtlich einer möglichst engen Molmassenverteilung erzielt man durch übliche Mitverwendung von Molmassenreglern in Mengen von 0,02 bis 2 Gew.-%, bezogen auf die Gesamtmenge der Monomeren. Solche Regler, mit denen sich je nach Menge ein mittleres Molekulargewicht zwischen 20 000 und 200 000 einstellen läßt, sind vorzugsweise Alkylmerkaptane wie n-Dodecylmerkaptan und t-Dodecylmerkaptan.

Ein wesentliches Merkmal der Erfindung ist es, die Polymerisation über den Großteil der Polymerisationszeit bei annähernd konstanter Temperatur, also in einem möglichst engen Temperaturintervall von ±2°C einer einmal gewählten Anfangstemperatur auszuführen. Unter Großteil sind hierbei mindestens 50 % der Gesamtzeit zu verstehen. Eine geringere Anfangstemperatur und tiefere oder höhere Temperaturen gegen Ende der Polymerisation sowie auch zwischenzeitliche Abweichungen haben meist keinen negativen Einfluß auf die Produktqualität, jedoch ist eine isotherme Reaktionsführung über die gesamte Polymerisationszeit grundsätzlich von Vorteil. Sofern bei großtechnischen Ansätzen im

Polymerisationskessel ein Temperaturgefälle - etwa von innen nach außen - zu beobachten ist, gilt die Maßgabe der Temperaturkonstanz jeweils für die Temperatur an der gleichen Stelle.

Da die Polymerisationstemperatur über dem Siedepunkt des Methylmethacrylats liegt, ist es erforderlich, die Polymerisation mindestens unter dem Eigendruck des Polymerisationsgemisches auszuführen, also im Bereich von 1,1 bis 2,5 bar. Besonders vorteilhaft ist es jedoch, zur Vermeidung von Dampfblasen unter einem Druck zu arbeiten, der 0,5 bis 20 bar über dem Eigendruck liegt, den das Monomerengemisch unter der gewählten Reaktionstemperatur hat, wobei dieser Druck durch Aufpressen eines inerten Gases wie Stickstoff erzeugt werden kann.

Im übrigen nimmt man die Polymerisation in an sich bekannter Weise nach der Methodik der Substanzpolymerisation oder vorzugsweise der Suspensionspolymerisation vor. Dazu legt man die Wasser- und Monomerphase unter Zusatz von üblichen Dispergiermitteln vor. Hierzu eignen sich wasserlösliche oder wasserlöslich gemachte Stoffe wie beispielsweise Pektine, Gelatine, Methylcellulose oder andere Celluloseether. Ferner können Polyvinylalkohol, Alkalimetallsalze der Polyacrylsäure oder Polymethacrylsäure oder Alkalimetallsalze von Copolymerisaten aus Methylmethacrylat und Methacrylsäure verwendet werden. Darüber hinaus kann die Wasserphase gepuffert werden; üblich sind für den alkalischen Bereich Salze der Phosphorsäure, z.B. Mischungen von Kaliumdihydrogenphosphat und Dinatriumhydrogenphosphat.

Für die Verbesserung der Verarbeitungseigenschaften können Thermostabilisatoren, z.B. sterisch gehinderte Phenole und Gleitmittel, z.B. Stearinsäure zugegeben werden.

In der Monomerphase befinden sich der Molmassenregler sowie das erfindungsgemäße Initiatorsystem.

Durch mehrmaliges Aufpressen eines Inertgases wie Stickstoff und jeweils anschließendes Entspannen wird der Reaktionsansatz inertisiert. Nach erneutem Aufpressen von Inertgas dispergiert man zunächst in der Kälte die Monomerphase durch Rühren in der Wasserphase und erhitzt dann auf die Polymerisationstemperatur, die oberhalb des Siedepunktes von Methylmethacrylat im Bereich von 100 bis 140°C liegt. Der Druck im Kessel liegt zwischen 2 und 100 bar. Nach einer Reaktionszeit von 4 Stunden ist die Polymerisation in der Regel abgeschlossen.

Die erfindungsgemäßen Polymerisate zeichnen sich durch eine geringe Eigenfarbe, hohe Transparenz, hohen Oberflächenglanz sowie Blasen- und Schlierenfreiheit aus, weisen einen Restmonomerengehalt von meist weniger als 0,4 Gew.-% auf und sind in den besonders kurzen Polymerisationszeiten von etwa 2 bis 4 Stunden erhältlich.

Beispiele 1 bis 5

| | |
|---|---|
| Eine Mischung aus 190 kg | vollentsalztem Wasser, |
| 1,4 kg | des Natriumsalzes eines Copolymerisates aus 64 Gew.-% Methacrylsäure und 36 Gew.-% Methylmethacrylat in Form einer 1,6 gew.-%igen wäßrigen Lösung als Dispergiermittel und |
| 1,4 kg | Natriumphosphathydrat als Puffer sowie |

der aus der Tabelle ersichtlichen Monomerphase, welche die ebenfalls dort angegebenen Mengen verschiedener Initiatorsysteme sowie den Regler n-Dodecylmerkaptan enthielt, wurde bei Raumtemperatur zunächst mehrmals mit Stickstoff gespült, sodann 0,5 bar Stickstoff aufgepreßt, anschließend unter Rühren auf 125°C erhitzt und 3 h bei dieser Temperatur gehalten. Nach Abkühlung und Entspannung wurde das Polymerisat abgetrennt, gewaschen und getrocknet.

Beispiele 6 und 7

4000 kg Wasserphase, bestehend aus vollentsalztem Wasser, Dispergiermittel und Puffer gemäß den Beispielen 1 bis 5, wurden zusammen mit der aus der Tabelle ersichtlichen Monomerphase, welche die dort angegebenen Mengen verschiedener Initiatorsysteme, den Regler n-Dodecylmerkaptan und das Gleitmittel Stearinsäure enthielt, bei Raumtemperatur unter Rühren mehrmals mit Stickstoff gespült. Nach dem Aufpressen eines $N_2$-Druckes von 0,5 bar wurde die Mischung auf 128°C erhitzt und 3 Stunden bei dieser Temperatur gehalten, wobei der Druck im Kessel etwa 4 bar betrug. Das Reaktionsgemisch wurde gemäß den Beispielen 1 bis 5 aufgearbeitet.

Zur Qualitätsüberprüfung wurden die folgenden Eigenschaften gemessen:

- Restmonomerengehalt
- Schmelzindex (MFI, 230°C/3,8 kp) nach DIN 53 735
- Lösungsviskosität nach DIN 51 562
- UV-Transmission.

Der Gehalt an Restmonomeren wurde mittels der gaschromatographischen Headspace-Analyse, einer Methode zur Bestimmung verdampfbarer Bestandteile in Flüssigkeiten und Feststoffen (u.a. von Monomeren in Thermoplasten) gemessen.

Der Schmelzindex MFI (Dimension g/10 min), auch Schmelzflußindex genannt, ist ein international gebräuchlicher, vom Polymerisationsgrad abhängiger Kennwert für das Fließverhalten von Thermoplasten. Er gibt die Menge eines Polymeren an, die in 10 min durch eine genormte Düse aus einem zylindrischen Hohlraum mittels eines Stempels bestimmter spezifischer Belastung ausgepreßt wird. Der Schmelzindex nimmt mit zunehmendem Polymerisationsgrad stark ab; je kleiner sein Wert ist, desto schwerer fließbar, d.h. höhermolekular ist das Polymere.

Die Lösungsviskosität wird angegeben durch die Viskositätszahl VZ, die die relative Erhöhung der Viskosität eines Lösungsmittels durch 0,1 bis 1,0 g/100 ml gelöstes Polymer, geteilt durch die Konzentration in g/100 ml angibt. Die Viskositätszahlen steigen mit dem Polymerisationsgrad an.

$$VZ = \left( \frac{\eta}{\eta_o} - 1 \right) \cdot \frac{1}{C}$$

$\frac{\eta}{\eta_o}$ = Viskositätsverhältnis

mit

$\eta$ = Viskosität der Polymerlösung definierter Konzentration
$\eta_o$ = Viskosität des Lösungsmittels

C = Konzentration der Lösung in g/ml.

Die Messung der UV-Transmission dient zur Prüfung der UV-Lichtdurchlässigkeit des Polymeren, die durch Restmengen an Initiatoren beeinträchtigt werden kann. Da bei Polymethylmethacrylat eine hohe UV-Transmission gefordert ist, ist eine Transmission von mindestens 65 % bei 300 nm notwendig.

Die Einzelheiten dieser Versuche sowie deren Ergebnisse sind der Tabelle zu entnehmen.

Tabelle

| Bei-spiel | Monomere und Regler [kg] | Initiatoren I [g], Zerfalls-temperaturen T [°C] | | Restmonomeren-gehalt [Gew.-%] | MFI [g/10 min] | VZ [ml/g] | UV-Transmission bei 300 nm [%] |
|---|---|---|---|---|---|---|---|
| 1 | 174 Methylmethacrylat | 111 $I_{min}$[2]), | 92 | 1,0 | 2,2 | - | 40 |
| | 11 Methylacrylat | 79 $I_n$ [3]), | 119 | | | | |
| | 0,5 n-Dodecylmerkaptan | | | | | | |
| 2 | 174 Methylmethacrylat | 87 $I_{min}$[2]), | 92 | 0,25 | 2,2 | - | 50 |
| | 11 Methylacrylat | 45 $I_{max}$[4]), | 124 | | | | |
| | 0,55 n-Dodecylmerkaptan | 76 $I_n$[3]), | 119 | | | | |
| 3 | 174 Methylmethacrylat | 138 $I_{min}$[1]), | 80 | 0,25 | 2,2 | - | 70 |
| | 11 Methylacrylat | 202 $I_{max}$[4]), | 124 | | | | |
| | 0,55 n-Dodecylmerkaptan | | | | | | |
| 4 | 174 Methylmethacrylat | 133 $I_{min}$[1]), | 80 | 0,3 | 2,3 | - | 70 |
| | 11 Methylacrylat | 118 $I_{max}$[5]), | 124 | | | | |
| | 0,5 n-Dodecylmerkaptan | 131 $I_{max}$[6]), | 117 | | | | |

Tabelle (Fortsetzung)

| Bei-spiel | Monomere und Regler [kg] | | Initiatoren I [g], Zerfalls-temperaturen T [°C] | | Restmonomeren-gehalt [Gew.-%] | MFI [g/10 min] | VZ [ml/g] | UV-Transmission bei 300 nm [%] |
|---|---|---|---|---|---|---|---|---|
| 5 | 125 | Methylmethacrylat | 101 $I_{min}^{2)}$, | 92 | 0,3 | 300 | - | - |
| | 14 | Butylacrylat | 71 $I_{max}^{5)}$, | 124 | | | | |
| | 1,3 | n-Dodecylmerkaptan | 82 $I_{n}^{3)}$, | 119 | | | | |
| 6 | 3650 | Methylmethacrylat | 1910 $I_{min}^{2)}$, | 92 | 1,0 (0,3)* | 1,6 | 74 | - |
| | 150 | Methylacrylat | 2030 $I_{n}^{3)}$ | 119 | | | | |
| | 13 | Stearinsäure | | | | | | |
| | 10 | n-Dodecylmerkaptan | | | | | | |
| 7 | 3650 | Methylmethacrylat | 1910 $I_{min}^{2)}$, | 92 | 0,3 | 1,6 | 69 | - |
| | 150 | Methylacrylat | 830 $I_{max}^{4)}$, | 124 | | | | |
| | 13 | Stearinsäure | 1630 $I_{n}^{3)}$, | 119 | | | | |
| | 11 | n-Dodecylmerkaptan | | | | | | |

* nach Entgasung

Erläuterungen zur Tabelle:

1) Dilauroylperoxid

2) t-Butyl-per-2-ethylhexanoat

3) t-Butyl-per-3,5,5-trimethylhexanoat

4) 2,2-Bis-(t-butylperoxy)-butan; 50 %ige Lösung in Aliphaten (genauere Angaben zur Zusammensetzung sind nicht möglich, da es ein Handelsprodukt der Firma Peroxid Chemie GmbH ist)

5) 2,2-Bis-(t-butylperoxy)-butan; 50 %ige Lösung in Weißöl

6) 1,1-Bis-(t-butylperoxy)-cyclohexan; 50 %ige Lösung in Weißöl

## Patentansprüche

**Patentansprüche für folgende Vertragsstaaten : DE, FR, GB, IT**

**1.** Substanz- und Suspensionspolymerisate aus

a) 80 bis 100 Gew.-% Methylmethacrylat und

b) 0 bis 20 Gew.-% weiteren radikalisch polymerisierbaren Monomeren,

erhältlich durch Polymerisation bei einer über den Großteil der Polymerisationszeit annähernd konstanten Temperatur zwischen 100 und 140°C mittels eines Initiatorsystems aus mindestens zwei peroxidischen Initiatoren I unterschiedlicher Zerfallstemperaturen T, bei denen jeweils die Hälfte des Initiators nach 1 h zerfallen ist, wobei

- der Initiator $I_{min}$ mit der tiefsten Zerfallstemperatur eine Zerfallstemperatur $T_{min}$ im Bereich von 60 bis 100°C hat,

- der Initiator $I_{max}$ mit der höchsten Zerfallstemperatur eine Zerfallstemperatur $T_{max}$ im Bereich von 100 bis 140°C hat, die Differenz von $T_{max}$ und $T_{min}$ größer als 10°C und $I_{max}$ ein Perketal der allgemeinen Formel (1) ist,

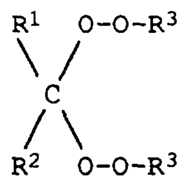

(1)

in der die Reste $R^1$ und $R^2$ gleiche oder verschiedene Alkylreste mit 1 bis 5 Kohlenstoffatomen sind, wobei $R^1$ und $R^2$ zu einem 5- oder 6-Ring verbunden sein können und $R^3$ ein tert.-Butyl- oder tert.-Amylrest ist, wobei der Anteil der Initiator $I_{max}$ 20 bis 80 mol-%, bezogen auf die Gesamtkatalysatormenge, beträgt, sowie

- weitere Initiatoren $I_n$, die gewünschtenfalls mitverwendet werden können, Zerfallstemperaturen $T_n$ zwischen $T_{min}$ und $T_{max}$ aufweisen mit der Maßgabe, daß die Polymerisationszeit nicht größer als vier Stunden beträgt.

**2.** Substanz- und Suspensionspolymerisate nach Anspruch 1, erhältlich aus Acrylsäure, Methacrylsäure, $C_1$-$C_6$-Alkylestern der Acrylsäure und/oder $C_2$-$C_6$-Alkylestern der Methacrylsäure als Comonomeren (b).

**3.** Substanz- und Suspensionspolymerisate nach Anspruch 1 oder 2, erhältlich unter Verwendung von
1,1-Bis-(t-butylperoxy)-3,3,5-trimethylcyclohexan,
1,1-Bis-(t-butylperoxy)-cyclohexan oder
2,2-Bis-(t-butylperoxy)-butan
als Initiatoren $I_{max}$.

**4.** Substanz- und Suspensionspolymerisate nach den Ansprüchen 1 bis 3, erhältlich unter Verwendung von insgesamt 0,01 bis 0,1 mol-% als Gesamtmenge aller Initiatoren, bezogen auf die Gesamtmenge der Monomeren.

**5.** Substanz- und Suspensionspolymerisate nach den Ansprüchen 1 bis 4, erhältlich mit einem Anteil an Perketalen (1) von 25 bis 100 mol-% der Initiatoren deren Zerfallstemperatur zwischen 100 und 140°C liegt.

**6.** Substanz- und Suspensionspolymerisate nach den Ansprüchen 1 bis 5, erhältlich unter Mitverwendung eines Alkylmerkaptans als Molmassenregler.

**7.** Verfahren zur Herstellung von Substanz- und Suspensionspolymerisaten aus

a) 80 bis 100 Gew.-% Methylmethacrylat und

b) 0 bis 20 Gew.-% weiteren radikalisch polymerisierbaren Monomeren

durch Polymerisation mittels eines Initiatorsystems aus mindestens zwei Initiatoren I unterschiedlicher Zerfallstemperaturen T zwischen 60 und 140°C, bei denen jeweils die Hälfte des Initiators nach 1 Stunde zerfallen ist, dadurch gekennzeichnet, daß

- der Initiator $I_{min}$ mit der tiefsten Zerfallstemperatur eine Zerfallstemperatur $T_{min}$ im Bereich von 60 bis 100°C hat,
- der Initiator $I_{max}$ mit der höchsten Zerfallstemperatur eine Zerfallstemperatur $T_{max}$ im Bereich von 100 bis 140°C hat, die Differenz von $T_{max}$ und $T_{min}$ größer als 10°C und $I_{max}$ ein Perketal der allgemeinen Formel (1) ist,

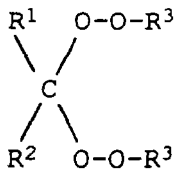

(1)

in der die Reste $R^1$ und $R^2$ gleiche oder verschiedene Alkylreste mit 1 bis 5 Kohlenstoffatomen sind, wobei $R^1$ und $R^2$ zu einem 5- oder 6-Ring verbunden sein können und $R^3$ ein tert.-Butyl- oder tert.-Amylrest ist, sowie

- weitere Initiatoren $I_n$, die gewünschtenfalls mitverwendet werden können, Zerfallstemperaturen $T_n$ zwischen $T_{min}$ und $T_{max}$ aufweisen und wobei
- die Polymerisationstemperatur zwischen 100 und 140°C liegt und über den Großteil der Polymerisationsdauer, die nicht größer als vier Stunden ist, annähernd konstant gehalten wird.

**8.** Verfahren zur Herstellung von Substanz- und Suspensionspolymerisaten nach Anspruch 7, dadurch gekennzeichnet, daß man die Polymerisation durch Aufpressen eines inerten Gases unter einem Druck vornimmt, der 0,5 bis 20 bar über dem Eigendruck liegt, den das Monomerengemisch unter der gewählten Reaktionstemperatur hat.

**9.** Verwendung der Substanz- und Suspensionspolymerisate gemäß Anspruch 1 zur Herstellung von Formkörpern.

**10.** Formkörper aus den Polymerisaten gemäß Anspruch 1.

**11.** Verwendung eines Initiatorsystems aus mindestens zwei peroxidischen Initiatoren I unterschiedlicher Zerfallstemperaturen T, bei denen jeweils die Hälfte des Initiators nach 1 h zerfallen ist, wobei

- der Initiator $I_{min}$ mit der tiefsten Zerfallstemperatur eine Zerfallstemperatur $T_{min}$ im Bereich von 60 bis 100°C hat,
- der Initiator $I_{max}$ mit der höchsten Zerfallstemperatur eine Zerfallstemperatur $T_{max}$ im Bereich von 100 bis 140°C hat, die Differenz von $T_{max}$ und $T_{min}$ größer als 10°C und $I_{max}$ ein Perketal der allgemeinen Formel (1) ist,

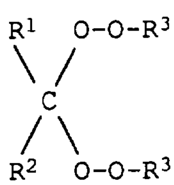

(1)

in der die Reste $R^1$ und $R^2$ gleiche oder verschiedene Alkylreste mit 1 bis 5 Kohlenstoffatomen sind, wobei $R^1$ und $R^2$ zu einem 5- oder 6-Ring verbunden sein können und $R^3$ ein tert.-Butyl- oder tert.-Amylrest ist sowie weitere Initiatoren $I_n$, die gewünschtenfalls mitverwendet werden können, Zerfallstemperaturen $T_n$ zwischen $T_{min}$ und $T_{max}$ aufweisen, zur Herstellung von Substanz- und Suspensionspolymerisaten aus

a) 80 bis 100 Gew.-% Methylmethacrylat und

b) 0 bis 20 Gew.-% weiteren radikalisch polymerisierbaren Monomeren

durch Polymerisation bei einer über den Großteil der Polymerisationszeit annähernd konstanten Temperatur zwischen 100 und 140°C.

**Patentansprüche für folgenden Vertragsstaat : ES**

1. Verfahren zur Herstellung von Substanz- und Suspensionspolymerisaten aus

   a) 80 bis 100 Gew.-% Methylmethacrylat und

   b) 0 bis 20 Gew.-% weiteren radikalisch polymerisierbaren Monomeren

   durch Polymerisation mittels eines Initiatorsystems aus mindestens zwei Initiatoren I unterschiedlicher Zerfallstemperaturen T zwischen 60 und 140°C, bei denen jeweils die Hälfte des Initiators nach 1 Stunde zerfallen ist, dadurch gekennzeichnet, daß

   - der Initiator $I_{min}$ mit der tiefsten Zerfallstemperatur eine Zerfallstemperatur $T_{min}$ im Bereich von 60 bis 100°C hat,
   - der Initiator $I_{max}$ mit der höchsten Zerfallstemperatur eine Zerfallstemperatur $T_{max}$ im Bereich von 100 bis 140°C hat, die Differenz von $T_{max}$ und $T_{min}$ größer als 10°C und $I_{max}$ ein Perketal der allgemeinen Formel (1) ist,

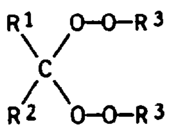

(1)

   in der die Reste $R^1$ und $R^2$ gleiche oder verschiedene Alkylreste mit 1 bis 5 Kohlenstoffatomen sind, wobei $R^1$ und $R^2$ zu einem 5- oder 6-Ring verbunden sein können und $R^3$ ein tert.-Butyl- oder tert.-Amylrest ist sowie

   - weitere Initiatoren $I_n$, die gewünschtenfalls mitverwendet werden können, Zerfallstemperaturen $T_n$ zwischen $T_{min}$ und $T_{max}$ aufweisen und wobei
   - die Polymerisationstemperatur zwischen 100 und 140°C liegt und über den Großteil der Polymerisationsdauer, die nicht größer als vier Stunden ist annähernd konstant gehalten wird.

2. Verfahren zur Herstellung von Substanz- und Suspensionspolymerisaten nach Anspruch 1, dadurch gekennzeichnet, daß man die Polymerisation durch Aufpressen eines inerten Gases unter einem Druck vornimmt, der 0,5 bis 20 bar über dem Eigendruck liegt, den das Monomerengemisch unter der gewählten Reaktionstemperatur hat.

3. Verwendung der Substanz- und Suspensionspolymerisate gemäß Anspruch 1 zur Herstellung von Formkörpern.

4. Formkörper aus den Polymerisaten gemäß Anspruch 1.

**Claims**

**Claims for the following Contracting States : DE, FR, GB, IT**

1. A mass or suspension polymer of

a) from 80 to 100% by weight of methyl methacrylate and
b) from 0 to 20% by weight of further monomers capable of undergoing free radical polymerization,

obtainable by polymerization at a temperature of from 100 to 140°C, virtually constant over the major part of the polymerization time, by means of an initiator system of two or more peroxide initiators I having different decomposition temperatures T at which half of each initiator has decomposed after 1 hour, wherein

- the initiator $I_{min}$ having the lowest decomposition temperature has a decomposition temperature $T_{min}$ of from 60 to 100°C,
- the initiator $I_{max}$ having the highest decomposition temperature has a decomposition temperature $T_{max}$ of from 100 to 140°C, the difference between $T_{max}$ and $T_{min}$ is greater than 10°C and $I_{max}$ is a perketal of the general formula (1)

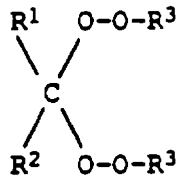

(1)

where $R^1$ and $R^2$ are identical or different alkyl radicals of 1 to 5 carbon atoms and may be bonded to form a 5-membered or 6-membered ring and $R^3$ is tert-butyl or tert-amyl, the amount of initiator $I_{max}$ being from 20 to 80 mol %, based on the total amount of catalyst, and
- further initiators $I_n$ which, if desired, may be concomitantly used have decomposition temperatures $T_n$ of from $T_{min}$ to $T_{max}$, with the proviso that the polymerization time is no longer than four hours.

**2.** A mass or suspension polymer as claimed in claim 1, obtainable from acrylic acid; methacrylic acid, $C_1$-$C_6$-alkyl esters of acrylic acid and/or $C_2$-$C_6$-alkyl esters of methacrylic acid as comonomer (b).

**3.** A mass or suspension polymer as claimed in claim 1 or 2, obtainable by using
1,1-bis-(tert-butylperoxy)-3,3,5-trimethylcyclohexane,
1,1-bis-(tert-butylperoxy)-cyclohexane or
2,2-bis-(tert-butylperoxy)-butane as initiator $I_{max}$.

**4.** A mass or suspension polymer as claimed in any of claims 1 to 3, obtainable using a total of from 0.01 to 0.1 mol %, based on the total amount of the monomers, as the total amount of all initiators.

**5.** A mass or suspension polymer as claimed in any of claims 1 to 4, obtainable using from 25 to 100 mol %, based on the initiators, of perketals (1) whose decomposition temperature is from 100 to 140°C.

**6.** A mass or suspension polymer as claimed in any of claims 1 to 5, obtainable with the concomitant use of an alkyl mercaptan as a molecular weight regulator.

**7.** A process for the preparation of a mass or suspension polymer of

a) from 80 to 100% by weight of methyl methacrylate and
b) from 0 to 20% by weight of further monomers capableof undergoing free radical polymerization,

by polymerization by means of an initiator system consisting of two or more initiators I having different decomposition temperatures T of from 60 to 140°C, at which in each case half the initiator has decomposed after 1 hour, wherein

- the initiator $I_{min}$ having the lowest decomposition temperature possesses a decomposition temperature $T_{min}$ of from 60 to 100°C,
- the initiator $I_{max}$ having the highest decomposition temperature possesses a decomposition temperature $T_{max}$ of from 100 to 140°C, the difference between $T_{max}$ and $T_{min}$ is greater than 10°C and $I_{max}$ is a perketal of the formula (1)

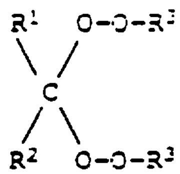

(1)

where $R^1$ and $R^2$ are identical or different alkyl radicals of 1 to 5 carbon atoms and $R^1$ and $R^2$ may be bonded to form a 5-membered or 6-membered ring and $R^3$ is tert-butyl or tert-amyl, and

- further initiators $I_n$ which, if desired, may be concomitantly used have a decomposition temperature $T_n$ of from $T_{min}$ to $T_{max}$ and
- the polymerization temperature is from 100 to 140°C and is kept virtually constant over the major part of the polymerization time, which is no longer than four hours.

**8.** A process for the preparation of a mass or suspension polymer as claimed in claim 7, wherein the polymerization is carried out by forcing in an inert gas under a pressure which is from 0.5 to 20 bar above the autogenous pressure of the monomer mixture at the chosen reaction temperature.

**9.** The use of a mass suspension polymer as claimed in claim 1 for the production of moldings.

**10.** A molding obtained from a polymer as claimed in claim 1.

**11.** The use of an initiator system consisting of two or more peroxide initiators I having different decomposition temperatures T at which half of each initiator has decomposed after 1 hour, wherein

- the initiator $I_{min}$ having the lowest decomposition temperature has a decomposition temperature $T_{min}$ of from 60 to 100°C,
- the initiator $I_{max}$ having the highest decomposition temperature has a decomposition temperature $T_{max}$ of from 100 to 140°C, the difference between $T_{max}$ and $T_{min}$ is greater than 10°C and $I_{max}$ is a perketal of the general formula (1)

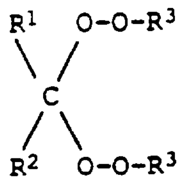

(1)

where $R^1$ and $R^2$ are identical or different alkyl radicals of 1 to 5 carbon atoms and may be bonded to form a 5-membered or 6-membered ring and $R^3$ is tert-butyl or tert-amyl, and

- further initiators $I_n$ which, if desired, may be concomitantly used have decomposition temperatures $T_n$ of from $T_{min}$ to $T_{max}$, for the preparation of a mass or suspension polymer of

a) from 80 to 100% by weight of methyl methacrylate and
b) from 0 to 20% by weight of further monomers capableof undergoing free radical polymerization

by polymerization at a temperature of from 100 to 140°C which is virtually constant over the major part of the polymerization time.

**Claims for the following Contracting State : ES**

**1.** A process for the preparation of a mass or suspension polymer of

a) from 80 to 100% by weight of methyl methacrylate and
b) from 0 to 20% by weight of further monomers capableof undergoing free radical polymerization,

by polymerization by means of an initiator system consisting of two or more initiators I having different decomposition temperatures T of from 60 to 140°C, at which in each case half the initiator has decomposed after 1 hour, wherein

- the initiator $I_{min}$ having the lowest decomposition temperature possesses a decomposition temperature $T_{min}$ of from 60 to 100°C,
- the initiator $I_{max}$ having the highest decomposition temperature possesses a decomposition temperature $T_{max}$ of from 100 to 140°C, the difference between $T_{max}$ and $T_{min}$ is greater than 10°C and $I_{max}$ is a perketal of the formula (1)

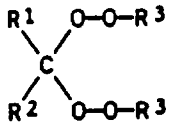

(1)

where $R^1$ and $R^2$ are identical or different alkyl radicals of 1 to 5 carbon atoms and $R^1$ and $R^2$ may be bonded to form a 5-membered or 6-membered ring and $R^3$ is tert-butyl or tert-amyl, and
- further initiators $I_n$ which, if desired, may be concomitantly used have a decomposition temperature $T_n$ of from $T_{min}$ to $T_{max}$ and
- the polymerization temperature is from 100 to 140°C and is kept virtually constant over the major part of the polymerization time, which is no longer than four hours.

**2.** A process for the preparation of a mass or suspension polymer as claimed in claim 1, wherein the polymerization is carried out by forcing in an inert gas under a pressure which is from 0.5 to 20 bar above the autogenous pressure of the monomer mixture at the chosen reaction temperature.

**3.** The use of a mass or suspension polymer as claimed in claim 1 for the production of moldings.

**4.** A molding obtained from a polymer as claimed in claim 1.

**Revendications**

**Revendications pour les Etats contractants suivants : DE, FR, GB, IT**

**1.** Produits de polymérisation en masse et en suspension, composés de

a) 80 à 100% en poids de méthacrylate de méthyle et de
b) 0 à 20% en poids d'autres monomères susceptibles de polymérisation radicalaire,

obtenus par polymérisation à une température comprise entre 100 et 140°C, approximativement constante pendant la majeure partie de la durée de polymérisation, au moyen d'un système amorceur composé d'au moins deux amorceurs I du type peroxyde dont les températures de décomposition T, à chacune desquelles la moitié de l'amorceur est décomposée au bout de 1 h, sont différentes,

- l'amorceur $I_{mim}$, dont la température de décomposition est la plus basse, ayant une température de décomposition $T_{min}$ dans la gamme de 60 à 100°C,
- l'amorceur $I_{max}$, dont la température de décomposition est la plus élevée, ayant une température de décomposition $T_{max}$ dans la gamme de 100 à 140°C, la différence entre $T_{max}$ et $T_{min}$ étant supérieure à l0°C, et $I_{max}$ étant un percétal de formule générale (1)

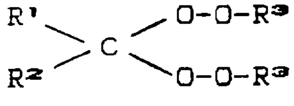

(1)

dans laquelle les restes $R^1$ et $R^2$ sont des restes alkyle à 1-5 atomes de carbone identiques ou différents, $R^1$ et $R^2$ pouvant être réunis en un noyau penta- ou hexagonal, et $R^3$ est un reste tert.-butyle ou tert.-amyle, la part de l'amorceur $I_{max}$ s'élevant à 20-80% en moles, par rapport à la quantité totale de catalyseur,
- ainsi que d'autres amorceurs $I_n$ qui peuvent être utilisées simultanément si on le désire et qui présentent des

températures de décomposition $T_n$ comprises entre $T_{min}$ et $T_{max}$, étant spécifié que la durée de polymérisation n'est pas supérieure à 4 h.

**2.** Produits de polymérisation en masse et en suspension selon la revendication 1, obtenus à partir d'acide acrylique, d'acide méthacrylique, d'esters alkyliques en $C_1$-$C_6$ de l'acide acrylique et/ou d'esters alkyliques en $C_2$-$C_6$ de l'acide méthacrylique en tant que comonomères (b).

**3.** Produits de polymérisation en masse et en suspension selon la revendication 1 ou 2, obtenus en utilisant
du 1, 1-bis- (t-butylperoxy)-3,3,5-triméthylcyclohexane,
du 1,1-bis-(t-butylperoxy)-cyclohexane ou
du 2,2-bis-(t-butylperoxy)-butane
comme amorceur $I_{max}$.

**4.** Produits de polymérisation en masse et en suspension selon l'une quelconque des revendications 1 à 3, obtenus en utilisant au total 0,01 à 0,1% en moles en tant que quantité totale de tous les amorceurs, par rapport à la quantité totale des monomères.

**5.** Produits de polymérisation en masse et en suspension selon l'une quelconque des revendications 1 à 4, obtenus avec une proportion de percétals (1) de 25 à 100% en moles des amorceurs dont la température de décomposition est comprise entre 100 et 140°C.

**6.** Produits de polymérisation en masse et en suspension selon l'une quelconque des revendications 1 à 5, obtenus avec utilisation simultanée d'un alkylmercaptan en tant que régulateur de la masse moléculaire.

**7.** Procédé de préparation de produits de polymérisation en masse et en suspension à partir de

a) 80 à 100% en poids de méthacrylate de méthyle et de
b) 0 à 20% en poids d'autres monomères susceptibles de polymérisation radicalaire,

par polymérisation au moyen d'un système amorceur composé d'au moins deux amorceurs I dont les températures de décomposition T, à chacune desquelles la moitié de l'amorceur est décomposée au bout de 1 h, sont différentes et comprises entre 60 et 140°C, caractérisé en ce que

- l'amorceur $I_{min}$, dont la température de décomposition est la plus basse, a une température de décomposition $T_{min}$ dans la gamme de 60 à 100°C,
- l'amorceur $I_{max}$, dont la température de décomposition est la plus élevée, a une température de décomposition $T_{max}$ dans la gamme de 100 à 140°C, la différence entre $T_{max}$ et $T_{min}$ est supérieure à 10°C, et $I_{max}$ est un percétal de formule générale (1)

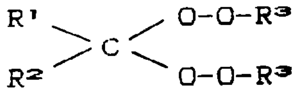

(1)

dans laquelle les restes $R^1$ et $R^2$ sont des restes alkyle à 1-5 atomes de carbone identiques ou différents, $R^1$ et $R^2$ pouvant être réunis en un noyau penta- ou hexagonal, et $R^3$ est un reste tert.-butyle ou tert.-amyle,
- d'autres amorceurs $I_n$, qui peuvent être utilisés simultanément si on le désire, présentent des températures de décomposition $T_n$ comprises entre $T_{min}$ et $T_{max}$,
- la température de polymérisation est comprise entre 100 et 140°C et est maintenue approximativement constante pendant la majeure partie de la durée de polymérisation, laquelle n'est pas supérieure à 4 h.

**8.** Procédé de préparation de produits de polymérisation en masse et en suspension selon la revendication 7, caractérisé en ce que l'on procède à la polymérisation en comprimant un gaz inerte sous une pression qui est supérieure de 0, 5 à 20 bar à la pression propre à laquelle est le mélange de monomères dans les conditions choisies de température de réaction.

**9.** Utilisation des produits de polymérisation en masse et en suspension selon la revendication 1 pour la fabrication de corps moulés.

**10.** Corps moulés, formés des produits de polymérisation selon la revendication 1.

**11.** Utilisation d'un système amorceur composé d'au moins deux amorceurs peroxydiques I dont les températures de décomposition T, à chacune desquelles la moitié de l'amorceur est décomposée au bout de 1 h, sont différentes,

- l'amorceur $I_{min}$, dont la température de décomposition est la plus basse, ayant une température de décomposition $T_{min}$ dans la gamme de 60 à 100°C,
- l'amorceur $I_{max}$, dont la température de décomposition est la plus élevée, ayant une température de décomposition $T_{max}$ dans la gamme de 100 à 140°C, la différence entre $T_{max}$ et $T_{min}$ étant supérieure à 10°C, et $I_{max}$ étant un percétal de formule générale (1)

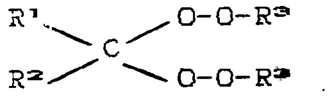

(1)

dans laquelle les restes $R^1$ et $R^2$ sont des restes alkyle à 1-5 atomes de carbone identiques ou différents, $R^1$ et $R^2$ pouvant être réunis en un noyau penta- ou hexagonal, et $R^3$ est un reste tert.-butyle ou tert.-amyle, ainsi que d'autres amorceurs $I_n$, qui peuvent être utilisés simultanément si on le désire et qui présentent des températures de décomposition $T_n$ comprises entre $T_{min}$ et $T_{max}$,

pour la préparation de produits de polymérisation en masse et en suspension à partir de

a) 80 à 100% en poids de méthacrylate de méthyle et de
b) 0 à 20% en poids d'autres monomères susceptibles de polymérisation radicalaire,

par polymérisation à une température comprise entre 100 et 140°C, approximativement constante pendant la majeure partie de la durée de polymérisation.

**Revendications pour l'Etat contractant suivant : ES**

**1.** Procédé de préparation de produits de polymérisation en masse et en suspension à partir de

a) 80 à 100% en poids de méthacrylate de méthyle et de
b) 0 à 20% en poids d'autres monomères susceptibles de polymérisation radicalaire,

par polymérisation au moyen d'un système amorceur composé d'au moins deux amorceurs I dont les températures de décomposition T, à chacune desquelles la moitié de l'amorceur est décomposée au bout de 1 h, sont différentes et comprises entre 60 et 140°C, caractérisé en ce que

- l'amorceur $I_{min}$, dont la température de décomposition est la plus basse, a une température de décomposition $T_{min}$ dans la gamme de 60 à 100°C,
- l'amorceur $I_{max}$, dont la température de décomposition est la plus élevée, a une température de décomposition $T_{max}$ dans la gamme de 100 à 140°C, la différence entre $T_{max}$ et $T_{min}$ est supérieure à 10°C, et $I_{max}$ est un percétal de formule générale (1)

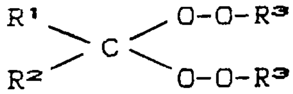

(1)

dans laquelle les restes $R^1$ et $R^2$ sont des restes alkyle à 1-5 atomes de carbone identiques ou différents, $R^1$ et $R^2$ pouvant être réunis en un noyau penta- ou hexagonal, et $R^3$ est un reste tert.-butyle ou tert.-amyle,
- d'autres amorceurs $I_n$, qui peuvent être utilisés simultanément si on le désire, présentent des températures de décomposition $T_n$ comprises entre $T_{min}$ et $T_{max}$,
- la température de polymérisation étant comprise entre 100 et 140°C et étant maintenue approximativement constante pendant la majeure partie de la durée de polymérisation, laquelle n'est pas supérieure à 4 h.

**2.** Procédé de préparation de produits de polymérisation en masse et en suspension selon la revendication 1, caractérisé en ce que l'on procède à la polymérisation en comprimant un gaz inerte sous une pression qui est supérieure de 0,5 à 20 bar à la pression propre à laquelle est le mélange de monomères dans les conditions choisies de température de réaction.

3. Utilisation des produits de polymérisation en masse et en suspension selon la revendication 1 pour la fabrication de corps moulés.

4. Corps moulés, formés des produits de polymérisation selon la revendication 1.